Europäisches Patentamt

European Patent Office

Office européen des brevets

(19)

(11) Publication number : **0 463 791 A2**

(12)

# EUROPEAN PATENT APPLICATION

(21) Application number : **91305542.2**

(22) Date of filing : **19.06.91**

(51) Int. Cl.5 : **F16P 3/08**

(30) Priority : **22.06.90 GB 9013927**

(43) Date of publication of application :
**02.01.92 Bulletin 92/01**

(84) Designated Contracting States :
**BE DE DK ES FR GB GR IT NL SE**

(71) Applicant : **ELECTROLUX NORTHERN LIMITED**
**Preston Road Aycliffe Industrial Estate**
**Newton Aycliffe Co. Durham, DL5 6UP (GB)**

(72) Inventor : **Wytcherley, Brian**
**18 Netherby Rise**
**Darlington, Co. Durham (GB)**

(74) Representative : **Arthur, Bryan Edward et al**
**Withers & Rogers 4 Dyer's Buildings Holborn**
**London EC1N 2JT (GB)**

(54) Enclosure for electrical device.

(57)   This invention relates to an enclosure for an electrically powered device and particularly to a safety interlock for domestic apparatus having internal rotating members, such as a shredder of garden and other waste material. The enclosure described has a closable access cover and a latching member engageable only when said cover is in the closed condition, the latching member including electrical connection means connectable with a power source only when said member is in the engaged condition.

EP 0 463 791 A2

This invention relates to an enclosure for an electrically powered device and particularly to a safety interlock for domestic apparatus having internal rotating members.

The dangers of machines having rotating parts are well known and it is usual for such machines to have shrouds or safety guards to prevent inadvertent contact of the operator with the rotating members.

Garden shredders are particularly dangerous since they include rotating blades capable of chopping woody garden material into small pieces. Such shredders are normally powered by mains electricity (240v) but include effective safeguards to ensure against electrical shocks whilst operating in the garden.

One problem with garden shredders is that the blades and/or the discharge passage sometimes become blocked by wet fibrous material. To clear the blockage the blade cover must be opened and this action poses a considerable danger should the shredder motor be inadvertently started.

Despite clear instructions to the contrary and good operating practice, there is a danger that the operator will not disconnect the electrical supply before lifting the cover; the operator may feel that merely switching off the drive motor is sufficient.

Safety interlocks have been previously proposed which attempt to tackle this problem. For example a machine may include a switch in the electrical supply which can only pass current when the safety cover is closed. Such switches are usually actuated mechanically on closure of the cover and suffer from the disadvantage that the switch mechanism is usually accessible to the user so that he may, for example, override the switch in order to check that the blades are rotating freely under power.

The present invention provides a novel enclosure incorporating a safety interlock which cannot be overridden, and thus ensures the safety of the machine user.

According to the invention there is provided an enclosure for an electrically powered device, the enclosure having a closable access cover and a latching member engageable only when said cover is in the closed condition, the latching member including electrical connection means connectable with a power source only when said member is the engaged condition.

Such an arrangement ensures that the power source must be disconnected before the latching member can be disengaged to permit opening of the access cover. Furthermore, since the latching member incorporates electrical connection means for the device, the electrical supply cannot be connected to the device without engagement of the latching member.

The access cover may be hinged, slidable or movable with respect to the enclosure in any other way.

In a preferred embodiment the cover is hinged to the enclosure, the latching member being engageable in the vicinity of the hinge and having abutment faces to engage adjacent surfaces of the lid and enclosure. The surfaces of the lid and enclosure adjacent the hinge define an included angle, and the latching member comprises a wedge adapted to closely fit within said angle.

The wedge may be removable or may be hinged to the lid or enclosure.

Other features of the invention will be apparent from the following description of a preferred embodiment in which:-

Fig. 1 illustrates a conventional electrical machine;

Fig. 2 is a partial elevation of an enclosure according to the invention in the closed condition;

Fig. 3 corresponds to Fig 2 but shows the enclosure in the open condition;

Fig. 4 is a perspective view of a housing with a preferred embodiment of the latching member;

Fig. 5 is a partial elevation of the latching member illustrated in Fig. 4;

Fig. 6 is partial section through the latching member of Fig. 5 on line 6-6;

Fig. 7 is a partial section through the latching member of Fig. 6 on line 7-7;

Fig. 8 corresponds to Fig. 7 and shows the latching member in the disengaged condition;

Fig. 9 is an elevation of modified latching member similar to that illustrated in Fig. 5; and

Fig. 10 is a partial section through a machine adapted to receive the latching member of Fig. 9;

Fig. 11 illustrates in part section a modification of the preferred embodiment and in the latched condition;

Fig. 12 corresponds to Fig. 11 and illustrates the unlatched condition;

Fig. 13 is a perspective view of the latching member illustrated in Figs. 11 and 12; and

Fig. 14 is a view similar to Figs. 7 and 8 and showing the modified embodiment in the latched condition.

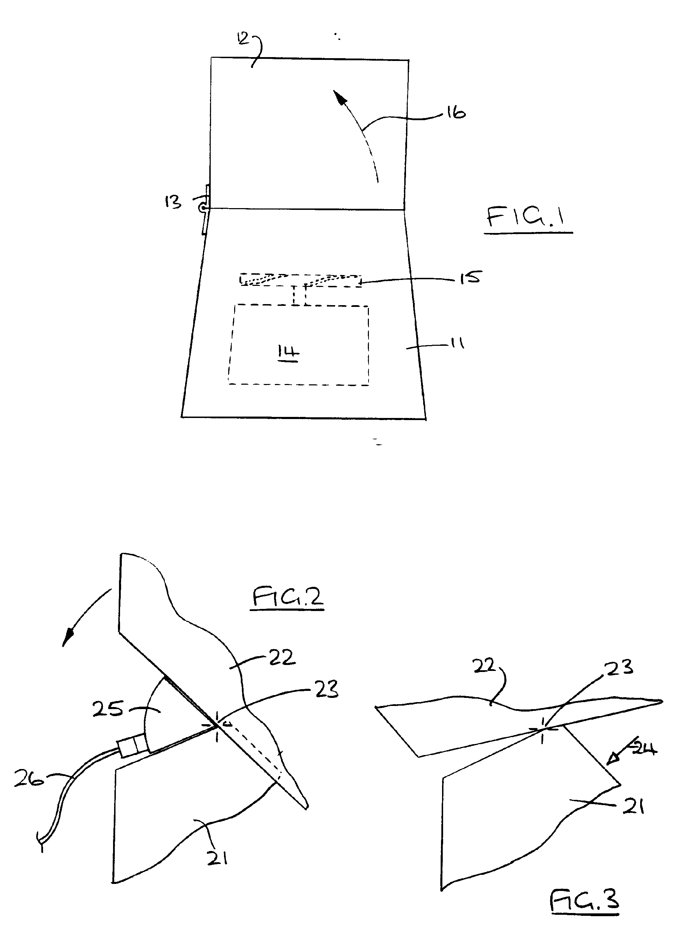

With reference to the drawings, Fig. 1 shows a conventional electrical machine having an enclosure 11 with a cover 12 connected thereto by a hinge 13. Within the body is an electrical motor 14 and rotating member 15 (both illustrated in dotted outline). The cover 12 may be opened in the direction of arrow 16 to allow access to the member 15.

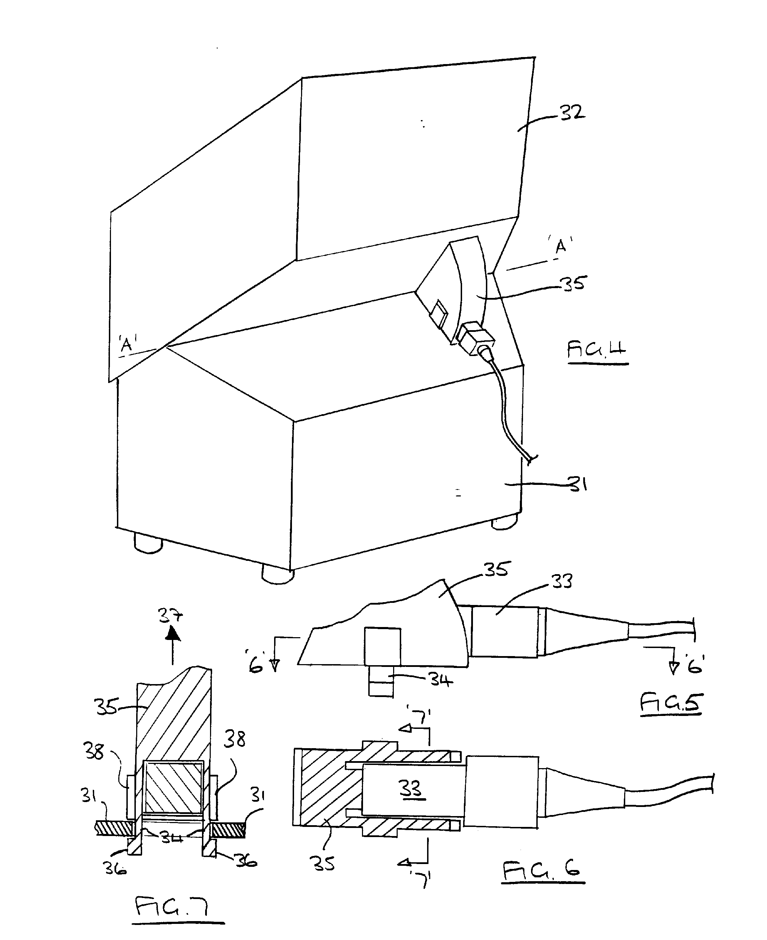

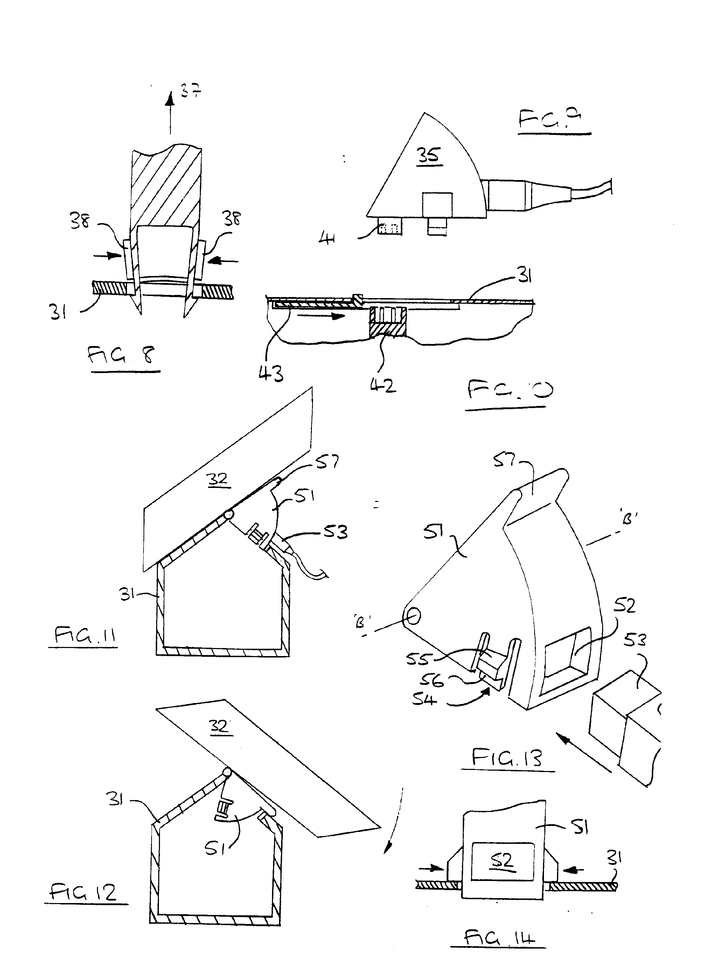

The essence of the present invention is illustrated in Figs. 2 and 3. An enclosure 21 and cover 22 are connected by a hinge 23; Fig. 2 illustrates the enclosure with the cover closed and Fig. 3 with the cover open for access to a motor or other component.

The arrangement of Fig. 2 includes a removable wedge shaped latching member 25 having an electrical supply lead 26 extending therefrom. The latching member 25 includes conventional means for passing the electrical supply to the machine motor, for example a female/male socket arrangement.

The member 25 provides a mechanical obstruction which absolutely prevents opening of the lid until removed; since the electrical supply passes through the latching member 25, removal thereof disconnects the machine and renders it safe. Furthermore, by virtue of the mechanical contact between body 21, member 25 and cover 22, relative movement of the cover towards the body prevents re-connection of the electrical supply until the cover is moved back to the closed condition.

Figs. 4-8 illustrate a preferred embodiment of the invention.

A machine comprises a body 31 and cover 32 hinged thereto about line 'A-A'. A wedge shaped latching member 25 holds the body and cover in the safe condition to prevent access to the internal parts of the machine.

The member 35 includes a recessed male socket to receive a conventional female electrical supply plug 33.

Opposite tongues 34 depend from member 35 and have outwardly facing teeth 36 as best illustrated in Fig. 7. In the engaged condition, the teeth locate within the housing of the machine body 31 thereby preventing removal of the member 35 in the direction of arrow 37 (Fig. 7).

On either side of the latching member, immediately above the tongues 34, are raised pads 38 between which the member 35 may be gripped. Squeezing of the pads toward one another results in resilient deformation of the tongues 34 thus permitting removal of the member from the body 31 (Fig. 8).

However, as clearly illustrated in Figs. 6 and 7, insertion of the supply plug 33 prevents inward movement of the pads 38 and thus ensures that the member 35 may not be removed whilst the electrical supply is connected; access to the internal machine parts is thus prevented whilst the electrical supply is connected.

The electrical supply passes to the machine motor through the latching member 35. One suitable arrangement is illustrated in Figs. 9 and 10.

The latching member includes a protruding female plug 41 for engagement with a recessed male socket 42 within the machine body 31, insertion of the member 35 ensuring electrical continuity between the socket and plug.

The machine body may include a spring closed cover 43 slidable in channels of the body to cover the socket 42 when the latching member is not in place.

The latching member 35 is for example of moulded plastic material having good properties of electrical insulation and resilience.

It is essential that the arrangement of electrical connectors incorporated in plug 41 and socket 42 is not conventional for otherwise it might be possible for the user to make a direct electrical connection to the socket 42. The precise arrangement of connectors is not however important provided the electrical connection is adequate for the purpose.

A modification of the preferred embodiment is illustrated in Figs. 11-13. The latching member 51 is pivoted to the machine body 31 about an axis 'B-B' which may coincide with the pivoting axis of the cover 32. The member 51 includes a recessed male electrical socket 52 adapted to receive a plug 53; the socket 52 is in use connected directly to the electrical device housed within the body 31. Resilient tongues 54 are provided on either side of the member 51 and each includes an outwardly extending projection having an upwardly facing ramp face 55 and a downwardly facing abutment face 56. A projection 57 provides both a stop and a lifting handle as will become apparent.

When engaged, the member adopts the position illustrated in Figs. 11 and 14 with the abutment faces 56 engaging the outer face of the body 31. In this condition the member holds the cover 32 in the closed position and the socket 52 is open to receive the plug 53.

The cover 31 may only be opened by removing the plug 53 and squeezing the tongues 54 inwardly to allow the member to drop into the body 31. The projection 57 limits inward movement of the member and provides a handgrip when the member is moved back to the engaged condition; the ramp faces 55 ensure that the tongues snap' into position.

Clearly the electrical socket 52 is only exposed for connection when the member 51 is in the engaged condition and the cover is thus closed.

Further abutment means may be provided to limit outward pivoting movement of the member 51, and the member 51 may be alternatively pivoted to swing into the cover 32.

## Claims

1.  An enclosure for an electrically powered device, the enclosure having a closable access cover and a latching member engageable only when said cover is in the closed condition, the latching member including electrical connection means connectable with a power source only when said member is in the engaged condition.

2.  An enclosure according to claim 1 wherein the cover is hinged to the enclosure, the latching member having abutment faces to engage surfaces of the cover and enclosure adjacent said hinge.

3.  An enclosure according to claim 2 wherein said surfaces define an acute angle therebetween.

4. An enclosure according to claim 3 wherein said latching member includes resilient latching tongues engageable with one only of said cover and enclosure.

5. An enclosure according to claim 1 wherein the latching member includes at least one resilient latching tongue engageable with at least one of said cover and enclosure and wherein resistance to disengagement of the latching tongue is established when the electrical connection means is connected.

6. An enclosure according to claim 5 including a recess for receiving the electrical connection means, a slot opening into the recess permitting movement therethrough into the recess of the said at least one resilient tongue when the electrical connection means is disconnected.

7. An enclosure according to claim 1 wherein the latching member is pivoted to the machine body, the latching member including a recess for the electrical connection means, at least one resilient latching tongue, each said tongue including an outwardly extending projection forming a stop to prevent unlatching unless the electrical connection means is disconnected.

8. A shredder for shredding garden material including an enclosure according to any preceding claim.

FIG.1

FIG.2

FIG.3

FIG.4

32

'A'

35

'A'

31

FIG.5

35

33

'6'

34

'6'

FIG.7

37

35

38

38

31

31

34

36

36

FIG.6

'7'

33

35

'7'

FIG.9

FIG.8

FIG.10

FIG.11

FIG.13

FIG.12

FIG.14